# EUROPÄISCHE PATENTSCHRIFT

(11) **EP 1 013 403 B1**
(45) Veröffentlichungstag und Bekanntmachung des Hinweises auf die Patenterteilung: **31.03.2004**
(21) Anmeldenummer: 99121989.0
(22) Anmeldetag: 10.11.1999
(51) Int. Cl.: B29C 49/24

(54) **Verfahren und Blasformwerkzeug zur Herstellung von mit einem Dekormaterial beschichteten Bauteilen**
Process and blow moulding tool for producing parts covered with decoration material
Procédé et outil de moulage pour soufflage pour la fabrication des pièces revêtue avec un matériau décoratif

(30) Priorität: 24.12.1998 DE 19860199
(43) Veröffentlichungstag der Anmeldung: 28.06.2000
(73) Patentinhaber: Möller Plast GmbH, 33649 Bielefeld (DE)
(72) Erfinder: Wrobbel, Werner, 33335 Gütersloh (DE)
(74) Vertreter: Schirmer, Siegfried, Dipl.-Ing.

(56) Entgegenhaltungen:
- US-A- 5 194 305
- US-A- 5 804 127
- PATENT ABSTRACTS OF JAPAN vol. 014, no. 450 (M-1030), 27. September 1990 (1990-09-27) & JP 02 179721 A (DAIKYO INC), 12. Juli 1990 (1990-07-12)

## Beschreibung

Die Erfindung betrifft ein Verfahren zur Herstellung von mit einem Dekormaterial beschichteten, doppelwandigen Bauteilen durch Blasformen, bei dem ein frisch extrudierter Kunststoffschlauch zusammen mit dem Dekormaterial in einem Blasformwerkzeug mit einer zwischen zwei Werkzeughälften gebildeten Werkzeugtrennung durch Einblasen von Luft in die der Werkzeuginnenkontur entsprechende Form gebracht wird, sowie ein Blasformwerkzeug zur Durchführung des Verfahrens.

Blasverfahren werden seit langem zur Herstellung von Hohlkörpern, wie Flaschen, Behältern und dgl., angewendet und haben sich auch bei der Fertigung von flach ausgebildeten doppelwandigen Bauteilen, wie sie beispielsweise in der Automobilindustrie für Hutablagen, Sonnenblenden, Armaturenbretter oder Konsolen verwendet werden, bewährt. Die doppelwandige Ausbildung solcher Bauteile dient zum einen der Schaffung von Kanälen und anderen Hohlräumen und sorgt gleichzeitig für eine ausreichende Steifigkeit.

Bei solchen ausgebildeten doppelwandigen Bauteilen entsteht beim Blasformen im Bereich der Trennlinie zwischen den beiden Werkzeughälften (Werkzeugtrennung) verfahrensbedingt ein Quetschbereich. Bei der anschließenden Nacharbeitung des Bauteils in diesem Bereich wird das dort haftende Dekormaterial beschädigt. Sofern dieser Teil der Außenkontur im sichtbaren Bereich liegt, genügt das Bauteil (Blasformteil) nicht den optischen und haptischen Anforderungen. Bei Maßtoleranzen längs des Quetschkantenbereichs wird entweder in den Konturbereich und damit das dort haftende Dekormaterial geschnitten, oder es wird ein zu geringer Teil des Materials an der Quetschkante abgetrennt.

Aus der Druckschrift US 5,804,127 ist ein mit Hilfe eines Blasformwerkzeugs auszuführendes Blasformverfahren bekannt, bei dem ein frisch extrudierter Kunststoffschlauch zusammen mit einem Dekormaterial in dem Blasformwerkzeug mit einer zwischen zwei Werkzeughälften gebildeten Werkzeugtrennung durch Einblasen von Luft in die der Werkzeuginnenkontur entsprechenden Form gebracht wird. In der Werkzeugtrennung ist ein Quetschbereich gebildet. Bei der Herstellung des Bauteils werden Schieber genutzt, um das Dekormaterial an dem Kunststoffschlauch anzulegen.

Aus der Druckschrift US 5,194,305 wird ein Blasformverfahren genutzt, um eine dekorative Schicht auf einen Kunststoffhohlkörper aufzubringen.

Der Erfindung liegt daher die Aufgabe zugrunde, ein Verfahren und ein entsprechendes Blasformwerkzeug zur Herstellung von mit einem Dekormaterial beschichteten doppelwandigen, im wesentlichen flachen Bauteilen anzugeben, das auch in dem durch die Werkzeugtrennung bestimmten Rand des Bauteils eine Dekorbeschichtung aufweist, die höchsten Anforderungen an die Optik und Haptik und damit an eine hochwertige Verarbeitung gerecht wird.

Erfindungsgemäß wird die Aufgabe durch ein Verfahren gemäß Patentanspruch 1 gelöst.

Dadurch können doppelwandige Baueile bereitgestellt werden, die auch an ihren Seitenrändern über eine Dekorbeschichtung aus Gewebe, Leder, Kunststoff-Folie und dgl. verfügen, die durch den Quetschbereich oder dessen nachträgliche Bearbeitung nicht beeinträchtigt ist und den an hochwertige doppelwandige Bauteile gestellten ästhetischen und haptischen Anforderungen in vollem Umfang gerecht wird.

Vorzugsweise wird der Quetschbereich in einen im Einbauzustand des Bauteils nicht sichtbaren Bereich verlegt. Das Dekormaterial kann bis zum Quetschbereich angeformt bzw. dort abgequetscht werden. Der Rand des Dekormaterial kann gleichermaßen in einer Nut in der Bauteilwandung versenkt werden oder kantenbündig am Bauteil oder dem angrenzenden Ende einer weiteren Dekorbeschichtung abgeschnitten werden.

Nach einem weiteren Merkmal der Erfindung erfolgt die Verlagerung des Quetschbereichs mit Hilfe eines in der Werkzeugtrennung verfahrbaren Schiebers.

Ein weiteres wichtiges Erfindungsmerkmal besteht darin, daß das Dekormaterial während des Blasformens nur teilweise oder gar nicht an den Seitenrand des doppelwandigen Bauteils angeformt wird, sondern ein überstehendes Ende des Dekormaterials innerhalb der Werkzeugtrennung bzw. zwischen dem Schieber und einer Werkzeughälfte gehalten wird und nach dem Entformen des Blasformteils um den Seitenrand herumgeklappt und nachträglich mit der Oberfläche des Bauteils verbunden wird.

Der umgeklappte Abschnitt des Dekormaterials kann dann am Quetschbereich oder an der Kante des Bauteils bzw. eines angrenzenden zweiten Dekormaterials abgetrennt werden.

Der Randbereich des Bauteils kann in weiterer Ausbildung der Erfindung zwischen den beiden Werkzeughälften auch als einstückiger - zusammengepreßter - Wandabschnitt geformt werden. Das überstehende Ende des Dekormaterials wird nach dem Entformen um diesen eine verdeckte Kante bildenden Wandabschnitt geklappt.

Das erfindungsgemäße Blasformwerkzeug zur Durchführung des Verfahrens ist durch einen in der Werkzeugtrennung in Längs- und Querrichtung verfahrbaren Schieber gekennzeichnet, der mit seiner zur ersten (oberen) Werkzeughälfte weisenden Fläche abdichtend an dieser und/oder dem überstehenden Ende des Dekormaterials anliegt, mit seiner Stirnfläche ganz oder teilweise die Innenkontur des Blasformwerkzeugs im Randbereich des doppelwndigen Bauteils bildet und mit seiner zur zweiten (unteren) Werkzeughälfte gerichteten Fläche und der zweiten Werkzeugfläche einen außerhalb des Randbereichs des doppelwandigen Bauteils liegenden Quetschspalt zur Ausbildung des Quetschbereichs des blasgeformten Bauteils und zur Aufnahme eines von dem Bauteil an dieser Stelle abgetrennten Abfallbutzens schafft.

Weitere Merkmale und vorteilhafte Weiterbildungen der Erfindung ergeben sich aus der nachfolgenden Beschreibung von beispielhaften Ausführungsformen der Erfindung und aus den Unteransprüchen.

In drei Ausführungsbeispielen wird die Erfindung anhand der Zeichnung näher erläutert. Es zeigen:
- Fig. 1: den Trennbereich eines Blasformwerkzeugs in schematischer Darstellung mit einem beidseitig mit einem Dekormaterial zu beschichtenden doppelwandigen Bauteil und einem in der Werkzeugtrennung angeordneten Schieber zur Verlagerung des Quetschbereichs und zum Halten des Dekormaterialendes, wobei das Dekormaterial während des Blasformens nicht mit dem Seitenrand des Bauteils verbunden und erst nach dem Entformen an diesem fixiert wird;
- Fig. 2: eine Ausführungsvariante nach Fig. 1 für ein einseitig zu beschichtendes Bauteil, wobei das Dekormaterial während des Blasformens teilweise an den Rand angeformt wird; und
- Fig. 3: eine weitere Ausführungsvariante der mit einem Schieber gestalteten Werkzeugtrennung, wobei der Randbereich des Bauteils zu einer einstückigen Wandung zusammengepreßt wird.

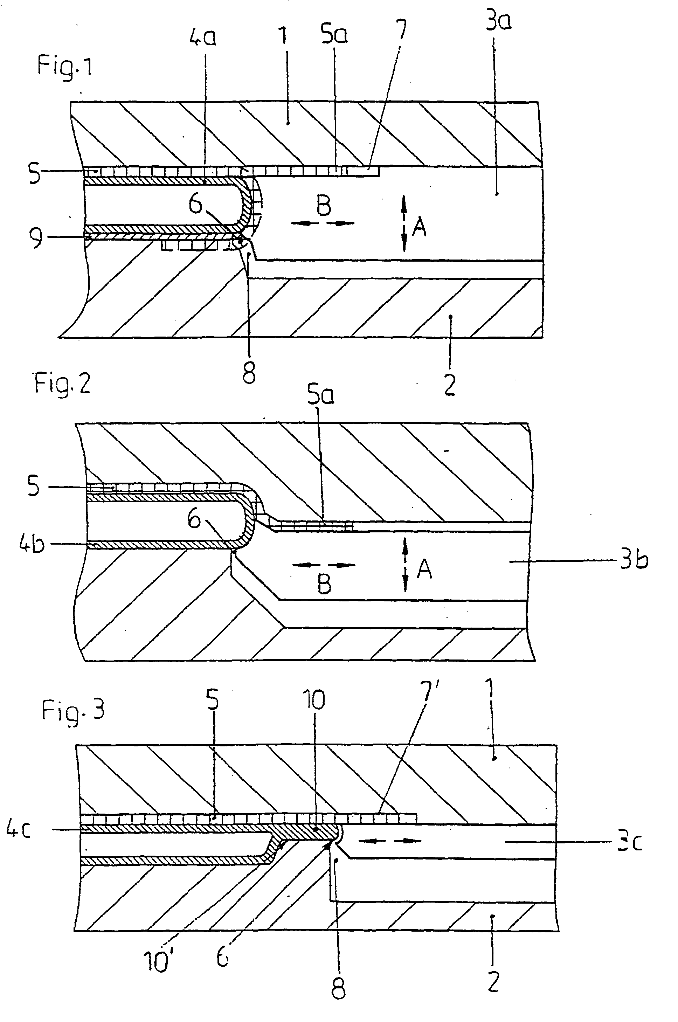

In den Figuren 1 bis 3 befinden sich die obere - erste - Werkzeughälfte 1 und die untere - zweite - Werkzeughälfte 2 jeweils in der geschlossenen Stellung des Blasformwerkzeugs. Im Bereich der Werkzeugtrennung ist jeweils ein in Querrichtung (Pfeil A) und in Längsrichtung (Pfeil B) verfahrbarer Schieber 3 (3a, 3b, 3c) angeordnet. Zwischen den beiden Werkzeughälften 1 und 2 befindet sich ein aus einem extrudierten Kunststoffschlauch durch Blasformen hergestelltes doppelwandiges Bauteil 4 (4a, 4b, 4c), dessen beide Wände durch die Innenkontur der beiden Werkzeughälften 1 und 2 und dessen Seitenrand durch die Stirnfläche des Schiebers 3 (3a, 3b, 3c) begrenzt ist.

Das doppelwandige Bauteil wird zumindest in seinem im späteren Einbauzustand sichtbaren Teil mit einem Dekormaterial 5 beschichtet. Die Beschichtung soll dabei so ausgeführt sein, daß sie auch in dem im Trennungsverlauf der beiden Werkzeughälften 1 und 2 gebildeten Quetschbereich höchsten Anforderungen an die Optik und Haptik des doppelwandigen Bauteils gerecht wird.

Zu diesem Zweck wird der Quetschbereich vom Seitenrand weg verlegt. Der Schieber 3 ist so ausgebildet und in die Werkzeugtrennung gelegt, daß der Quetschbereich 6 in einen im Einbauzustand des Bauteils nicht mehr sichtbaren Teil, hier an die sich an den Seitenrand anschließende untere Wand des Bauteils, verlegt wird. Zum zweiten dient der Schieber 3 der Halterung eines überstehenden Endes 5a des Dekormaterials 5 zwischen dem Schieber 3 und der oberen Werkzeughälfte 1. Das überstehende Ende 5a des Dekormaterials 5 kann dabei, wie Fig. 1 und 3 zeigen, während des Blasvorgangs in einer Ausnehmung 7 des Schiebers 3a oder in einer Ausnehmung 7' der oberen Werkzeughälfte 1 aufgenommen sein. Außerdem wird der Schieber 3 in Querrichtung der Trennung so dicht an die obere Werkzeughälfte 1 bzw. das überstehende Ende 5a des Dekormaterials 5 herangefahren, daß an dieser Stelle kein Material des blasgeformten Kunststoffschlauches (Bauteil 4) austreten kann. Schließlich dient der Schieber 3 auch der gleichmäßig gerundeten Ausbildung des Seitenrandes des doppelwandigen Bauteils 4.

Andererseits verbleibt zwischen der unteren Werkzeughälfte 2 und dem Schieber 3 (3a, 3b, 3c), das heißt, in der nicht sichtbaren Zone des Bauteils 4 (4a, 4b, 4c), ein dessen Quetschbereich 6 bestimmender Quetschspalt 8, über den ein nach dem Blasformen abgetrennter Abfallbutzen abgeführt werden kann.

Nach der Blasformgebung mit einem überstehenden Ende 5a des Dekormaterials 5 werden die beiden Werkzeughälften 1 und 2 auseinandergefahren und der Schieber 3 wird zurückgefahren. Anschließend wird das überstehende Ende 5a des Dekormaterials um den Seitenrand des Bauteils 4 herumgeklappt und durch Kleben oder andere geeignete Fixierverfahren mit diesem verbunden.

Gemäß Fig. 1 ist auf dem Bauteil 4 beidseitig ein Dekormaterial 5, 9 vorgesehen. Die obere Seite des Schiebers ,3a verläuft hier in einer Flucht mit der oberen Wand des Bauteils 4 bzw. dem Dekormaterial 5. Das Dekormaterial 9 an der unteren Wand des Bauteils ist in diesem Fall bis an den Quetschbereich 6 bzw. den Quetschspalt 8 gelegt, während das überstehende Ende 5a des Dekormaterials 5 nach dem Entformen um den beim Blasformen freigebliebenen Bereich geklappt wird.

In Fig. 2 sind der Schieber 3b und die beiden Werkzeughälften 1 und 2 so ausgebildet, daß die obere Wand des Bauteils 4b und die obere Fläche des Schiebers 3b nicht in einer Flucht liegen und somit das Dekormaterial 5 bereits während des Blasformvorgangs teilweise an den Seitenrand des Bauteils 4 angelegt wird.

In weiterer Ausbildung der in Fig. 2 gezeigten Ausführungsvariante kann das Dekormaterial 5 während des Blasvorgangs vollständig an dem Bauteil 4 anliegen und in dem aus dem Sichtbereich herausgelegten Quetschbereich 6 des Bauteils abgequetscht werden. Bei einer beidseitigen Dekormaterialbeschichtung kann der Quetschbereich mit dem Schieber so gelegt werden, daß die beiden Enden des Dekormaterials 5 und 9 bündig aneinanderstoßen bzw. in einer Nut versenkt werden.

Fig. 3 zeigt schließlich eine Ausführungsvariante, bei der die Innenkontur der beiden Werkzeughälften 1 und 2 so ausgebildet ist, daß die obere und die untere Wand des Bauteils 4 am Rand zu einer einstückigen, eine verdeckte Kante 10' bildenden Wand 10 zusammengepreßt werden. Mit dem Schieber 3c wird eine gerundete Randkontur an der zusammengepreßten Wand 10 erzeugt. Um die verdeckte Kante 10' wird das überstehende Ende 5' des Dekormaterials 5 gelegt, so daß eine optisch ansprechende Ausführung des beschichteten Bauteils geschaffen wird.

Die Erfindung ist nicht auf die vorhergehenden Ausführungsbeispiele beschränkt, sondern im Rahmen des Grundgedankens der Erfindung, wie es in den Patentansprüchen definiert ist, sind weitere Modifikationen denkbar.

### Bezugszeichenliste:

- 1: obere (erste) Werkzeughälfte
- 2: untere (zweite) Werkzeughälfte
- 3 (a, b, c): Schieber
- 4 (a, b, c): doppelwandiges flaches Bauteil (Blasformteil)
- 5: Dekormaterial
- 5a: überstehendes Ende des Dekormaterials
- 6: Quetschbereich
- 7: Ausnehmung im Schieber
- 7': Ausnehmung in oberer Werkzeughälfte
- 8: Quetschspalt im Werkzeug
- 9: Dekormaterial
- 10: einstückige Wand (Wandabschnitt)
- 10': verdeckte Kante

## Patentansprüche

1. Verfahren zur Herstellung von mit einem Dekormaterial beschichteten, doppelwandigen Bauteilen (4) durch Blasformen, bei dem ein frisch extrudierter Kunststoffschlauch zusammen mit dem Dekormaterial (9) in einem Blasformwerkzeug mit einer zwischen zwei Werkzeughälften (1, 2) gebildeten Werkzeugtrennung durch Einblasen von Luft in die der Werkzeuginnenkontur entsprechende Form gebracht wird, in der Werkzeugtrennung ein Quetschbereich (6) des Bauteils (4) entsteht, zur Verbesserung der Haptik und Optik des Bauteils der Quetschbereich (6) durch Versetzen der Werkzeugtrennung in einen vom Seitenrand des Bauteils (4) entfernten, sich an diesen anschließenden Abschnitt einer Bauteilwand verlegt wird, und das Dekormaterial (5) um den Seitenrand herum mit dem Bauteil (4) verbunden wird, **dadurch gekennzeichnet, daß** während des Blasformens ein über den Seitenrand des Blasformteils überstehendes Ende (5a) des Dekormaterials (5) zwischen einer Werkzeughälfte (1 oder 2) um den an dieser anliegenden Schieber (3) gehalten wird, und das überstehende Ende (5a) nach dem Entformen um den Seitenrand des Bauteils gelegt und mit diesem verbunden wird.

2. Verfahren nach Anspruch 1, **dadurch gekennzeichnet, daß** der Quetschbereich (6) in einen im Einbauzustand des Bauteils (4) nicht sichtbaren Abschnitt verlegt wird.

3. Verfahren nach Anspruch 1 oder 2, **dadurch gekennzeichnet, daß** die Verlagerung des Quetschbereichs mit Hilfe eines in der Werkzeugtrennung verfahrbaren Schiebers erfolgt.

4. Verfahren nach Anspruch 1, 2 oder 3, **dadurch gekennzeichnet, daß** das Dekormaterial bis zum Quetschbereich angeformt wird oder dort abgequetscht wird oder in einer Nutz der Bauteilwand versenkt wird oder an dem Bauteil bzw. einer weiteren Dekorfläche kantenbündig abgeschnitten wird.

5. Verfahren nach einem der vorangehenden Ansprüche, **dadurch gekennzeichnet, daß** das überstehende Ende (5a) des Dekormaterials während des Blasformens an einen Teil des Seitenrandes des Bauteils angeformt wird.

6. Verfahren nach Anspruch 5, **dadurch gekennzeichnet, daß** das umgeklappte Ende des Dekormaterials den Quetschbereich und ein gegebenenfalls auf dieser Seite des Bauteils befestigtes zweites Dekormaterial (9) überlappt oder an der Stoßstelle oder am Quetschbereich abgetrennt wird.

7. Verfahren nach einem der vorangehenden Ansprüche, **dadurch gekennzeichnet, daß** der Rand des doppelwandigen Bauteils zwischen den beiden Werkzeughälften als einstückiger Wandabschnitt (10) unter Bildung einer verdeckten Kante (10') zusammengepreßt wird und das überstehende Ende (5a) des Dekormaterials (5) nach dem Entformen um diesen Wandabschnitt herumgeklappt und an diesem und an der verdeckten Kante fixiert wird.

8. Blasformwerkzeug zur Durchführung des Verfahrens nach einem der vorhergehenden Ansprüche, bestehend aus zwei Werkzeughälften mit einer zwischen diesen gebildeten Werkzeugtrennung, wobei im Bereich der Werkzeugtrennung ein Schieber (3) angeordnet ist, der mit seiner zur ersten Werkzeughälfte (1) weisenden Fläche abdichtend an dieser und/oder dem überstehenden Ende des Dekormaterials anliegt, mit seiner Stirnfläche ganz oder teilweise die Innenkontur des Blasformwerkzeugs im Randbereich des doppelwandigen Bauteils (4) bildet und mit seiner zur zweiten Werkzeughälfte (2) weisenden Fläche und der zweiten Werkzeughälfte einen außerhalb des Seitenrands des Bauteils liegenden Quetschspalt (8) zur Ausbildung eines Quetschbereichs (6) des blasgeformten Bauteils und zur Aufnahme eines an dieser Stelle abgetrennten Abfallbutzens bildet, **dadurch gekennzeichnet, daß** der Schieber (3) sowohl in Längsrichtung zum Blasformteil hin als auch in Querrichtung über die Spalthöhe der Werkzeugtrennung verfahrbar ist.

9. Blasformwerkzeug nach Anspruch 8, **dadurch gekennzeichnet, daß** in dem Schieber (3) eine Ausnehmung zur Aufnahme des überstehenden Endes des Dekormaterials (5) vorgesehen ist.

10. Blasformwerkzeug nach Anspruch 8, **dadurch gekennzeichnet, daß** in der Innenkontur der ersten Werkzeughälfte (1) eine Ausnehmung zur Aufnahme des Dekormaterials (5) einschließlich dessen überstehenden Endes (5a) ausgebildet ist.

11. Blasformwerkzeug nach einem der Ansprüche 9 bis 10, **dadurch gekennzeichnet, daß** der zwischen Schieber (3) und zweiter Werkzeughälfte (2) gebildete Quetschspalt (8) im wesentlichen senkrecht zur Werkzeugtrennung verläuft.

## Claims

1. Method of producing double-walled components (4), which are coated with a decorative material, by blow-moulding, in which a freshly extruded synthetic material hose together with the decorative material (9) is brought into a blow-moulding tool with a tool separation, which is formed between two tool halves (1, 2), by blowing air into the mould corresponding with the tool internal profile, a pinch region (6) of the component (4) arises at the tool separation, for improvement of the tactile and optical aspects of the component the pinch region (6) is shifted, by displacement of the tool separation, into a section of a component wall which is spaced from the side edge of the component (4) and adjoins this, and the decorative material (5) is connected around the side edge with the component (4), **characterised in that** during the blow-moulding an end (5a), which protrudes beyond the side edge of the blow-moulded part, of the decorative material (5) is held between one tool half (1 or 2) around the slide (3) bearing against this, and the projecting end (5a) after removal from the mould is laid around the side edge of the component and connected therewith.

2. Method according to claim 1, **characterised in that** the pinch region (6) is shifted into a section not visible in the installed state of the component (4).

3. Method according to claim 1 or 2, **characterised in that** the shifting of the pinch region is carried out with the help of a slide movable in the tool separation.

4. Method according to claim 1, 2 or 3, **characterised in that** the decorative material is moulded on as far as the pinch region or crushed there or is sunk into a groove of the component wall or is cut off to be flush at the edge at the component or a further decorative surface.

5. Method according to one of the preceding claims, **characterised in that** the projecting end (5a) of the decorative material is moulded on at a part of the side edge of the component during the blow-moulding.

6. Method according to claim 5, **characterised in that** the folded-over end of the decorative material overlaps the pinch region and optionally a second decorative material (9), which is fastened to this side of the component, or is cut off at the butt location or at the pinch region.

7. Method according to one of the preceding claims, **characterised in that** the edge of the double-walled component is pressed together between the two tool halves as an integral wall section (10) with formation of a covered edge (10') and the projecting end (5a) of the decorative material (5) is folded over this wall section after removal from the mould and is fixed to this wall section and to the covered edge.

8. Blow-moulding tool for carrying out the method according to one of the preceding claims, consisting of two tool halves with a tool separation formed therebetween, wherein arranged in the region of the tool separation is a slide (3) which bears in sealing manner by its surface, which faces the first tool half (1), against this and/or against the projecting end of the decorative material, forms by its end surface entirely or partly the internal profile of the blow-moulding tool in the edge region of the double-walled component (4) and forms by its surface, which faces the second tool half (2), and the second tool half a pinch gap (8), which lies outside the side edge of the component, for formation of a pinch region (6) of the blow-moulded component and for reception of a waste bulge cut off at this location, **characterised in that** the slide (3) is movable not only in longitudinal direction towards the blow-moulding part, but also in transverse direction over the gap height of the tool separation.

9. Blow-moulding tool according to claim 8, **characterised in that** a recess for reception of the projecting end of the decorative material (5) is provided in the slide (3).

10. Blow-moulding tool according to claim 8, **characterised in that** a recess for reception of the decorative material (5) inclusive of the projecting end (5a) thereof is formed in the internal profile of the first tool half (1).

11. Blow-moulding tool according to one of claims 9 and 10, **characterised in that** the pinch gap (8) formed between slide (3) and second tool half (2) extends substantially perpendicularly to the tool separation.

## Revendications

1. Procédé de fabrication, par soufflage sur matrice, de pièces à double paroi (4) revêtues d'un matériau de décoration, selon lequel un tuyau de matière synthétique fraîchement extrudé est amené par soufflage d'air à la forme correspondant au contour intérieur de l'outil, avec le matériau de décoration (9), dans un outil de moulage pour soufflage comportant une séparation d'outil formée entre deux moitiés d'outil (1, 2), une zone d'écrasement (6) de la pièce (4) se crée dans la séparation d'outil, on déplace pour l'amélioration de l'aspect visuel et haptique la zone d'écrasement (6) en décalant la séparation d'outil en une section de paroi de pièce éloignée du bord latéral de la pièce (4), s'y raccordant, et le matériau de décoration (5) est lié à la pièce (4) autour du bord latéral,
**caractérisé en ce que**
pendant le moulage, une extrémité (5a) du matériau de décoration (5) qui dépasse du bord latéral de la forme moulée, est maintenue entre une moitié d'outil (1 ou 2) autour du coulisseau (3) qui repose contre lui, et l'extrémité (5a) qui dépasse est posée, après le démoulage, autour du bord latéral de la pièce et liée à celle-ci.

2. Procédé selon la revendication 1,
**caractérisé en ce que**
la zone d'écrasement (6) est déplacée en une section non visible en état monté de la pièce (4).

3. Procédé selon la revendication 1 ou 2,
**caractérisé en ce que**
le déplacement de la zone d'écrasement s'effectue à l'aide d'un coulisseau pouvant se déplacer dans la séparation d'outil.

4. Procédé selon la revendication 1, 2 ou 3,
**caractérisé en ce que**
le matériau de décoration est mis en forme jusqu'à la zone d'écrasement et est, en cet endroit, séparé par pincement ou noyé dans une rainure de la paroi de la pièce ou est coupé en affleurement d'arête sur la pièce ou une autre surface de décoration.

5. Procédé selon l'une quelconque des revendications précédentes,
**caractérisé en ce que**
l'extrémité (5a) qui dépasse du matériau de décoration est mise en forme pendant le moulage sur une partie du bord latéral de la pièce.

6. Procédé selon la revendication 5,
**caractérisé en ce que**
l'extrémité repliée du matériau de décoration se superpose à la zone d'écrasement et à un deuxième matériau de décoration (9) le cas échéant fixé sur ce côté de la pièce ou est séparée au point dé butée ou à la zone d'écrasement.

7. Procédé selon l'une quelconque des revendications précédentes,
**caractérisé en ce que**
le bord de la pièce à double paroi est compressé entre les deux moitiés d'outil en tant que section de paroi (10) monobloc en formant une arête recouverte (10'), et l'extrémité (5a) qui dépasse du matériau de décoration (5) est repliée après le démoulage autour de cette section de paroi et lui est fixée ainsi qu'à l'arête recouverte.

8. Outil de moulage pour soufflage pour appliquer le procédé selon l'une quelconque des revendications précédentes, se composant de deux moitiés d'outil comportant une séparation d'outil formée entre celles-ci, avec monté dans la zone de la séparation d'outil, un coulisseau (3) dont la surface dirigée vers la première moitié d'outil (1) repose sur celle-ci en l'étanchant, ou à l'extrémité qui dépasse du matériau de décoration, dont la surface frontale forme totalement ou partiellement le contour intérieur de l'outil de moulage pour soufflage dans la zone de bord de la pièce à double paroi (4), et dont la surface dirigée vers la deuxième moitié d'outil (2) forme avec la deuxième moitié d'outil une fente d'écrasement (8) reposant à l'extérieur du bord latéral de la pièce pour former une zone d'écrasement (6) de la pièce moulée et pour la réception d'un bout de déchet séparé en cet endroit,
**caractérisé en ce que**
le coulisseau (3) peut être déplacé aussi bien en direction longitudinale vers la forme moulée qu'en direction transversale sur la hauteur de fente de la séparation d'outil.

9. Outil de moulage pour soufflage selon la revendication 8,
**caractérisé en ce qu'**
un creux pour la réception de l'extrémité qui dépasse du matériau de décoration (5) est prévu dans le coulisseau (3).

10. Outil de moulage pour soufflage selon la revendication 8,
**caractérisé en ce qu'**
un creux pour la réception du matériau de décoration (5) y compris son extrémité (5a) qui dépasse est formé dans le contour intérieur de la première moitié d'outil.

11. Outil de moulage pour soufflage selon l'une quelconque des revendications 9 à 10,
**caractérisé en ce que**
la fente d'écrasement (8) formée entre le coulisseau (3) et la deuxième moitié d'outil (2) s'étend pour l'essentiel perpendiculairement à la séparation d'outil.
